Europäisches Patentamt

European Patent Office

Office européen des brevets

(19)

(11) Veröffentlichungsnummer: **0 089 696**

**A1**

(12) **EUROPÄISCHE PATENTANMELDUNG**

(21) Anmeldenummer: 83102940.0

(22) Anmeldetag: 24.03.83

(51) Int. Cl.³: **A 01 F 25/16**

(30) Priorität: 24.03.82 DE 3210864

(43) Veröffentlichungstag der Anmeldung:
28.09.83 Patentblatt 83/39

(84) Benannte Vertragsstaaten:
AT CH DE FR IT LI NL

(71) Anmelder: **Lesslhumer, Josef**
**Südtirolerstrasse 42**
**A-4600 Wels(AT)**

(72) Erfinder: **Lesslhumer, Josef**
**Südtirolerstrasse 42**
**A-4600 Wels(AT)**

(74) Vertreter: **Lorenz, Eduard et al,**
**Rechtsanwälte Lorenz, Eduard - Seidler, Bernhard**
**Seidler, Margrit - Gossel, Hans-K. Philipps, Ina, Dr.**
**Widenmayerstrasse 23**
**D-8000 München 22(DE)**

(54) Silo für Futtermittel.

(57) Ein Silo für Futtermittel, wie Grünfutter, Maisschrot oder dergleichen, besteht aus auf einer Bodenplatte (6) im wesentlichen luftdicht abgestützten Seitenwänden, an deren oberen Rändern eine den Silo überdeckende und im wesentlichen luftdicht verschließende Folie befestigt ist. Zum Absaugen von Luft aus dem geschlossenen Innenraum des Silos ist eine Pumpe vorgesehen. Um den Silo in einer den jeweiligen Bedürfnissen entsprechenden Größe aus Teilen herstellen zu können, die sich mit üblichen LKW anfahren lassen, bestehen dessen Seitenwände aus gleichartigen, im wesentlichen ebenen, seitlich miteinander verbundenen Wandelementen (1, 3), die zu einem rechteckigen Silobehälter der gewünschten Größe zusammengesetzt sind.

Fig 1

Ing. Josef Lesslhumer,
4600 Wels (Österreich)

Silo für Futtermittel

Die Erfindung betrifft einen Silo für Futtermittel, wie Grünfutter, Maisschrot oder dergleichen, mit auf einer Bodenplatte im wesentlichen luftdicht abgestützten Seitenwänden, an deren oberen Rändern eine den Silo überdeckende und im wesentlichen luftdicht verschließende Folie befestigt ist, und mit einer Luft aus dem geschlossenen Innenraum des Silos absaugenden Einrichtung.

Ein aus der DE-OS 30 30 458 bekannter Silo für Futtermittel weist eine untere wannenförmige Halbschale aus Stahl, Aluminium oder faserverstärktem Kunststoff auf, die selbst

0089696

dann, wenn sie bei der Errichtung des Silos aus einzelnen
Teilen zusammengesetzt wird, schwierig zu transportieren und
teuer in ihrer Herstellung ist und nur die Erstellung von Silos
mit relativ kleinem Fassungsvermögen zuläßt.

Aus der nicht vorveröffentlichten DE-OS 30 45 973 ist ein
wirtschaftlich herstellbarer Silo der eingangs angegebenen Art
bekannt, dessen unterer formsteifer Behälterteil aus einem auf
der Bodenplatte abgestützten zylindrischen Ring besteht. Ist
dieser Ring einstückig, ergeben sich erhebliche Schwierigkeiten
beim Straßentransport. Auch wenn der Ring bei der Errichtung
des Silos aus mehreren Segmenten aufgebaut wird, läßt sich
immer nur ein Silo vorbestimmter Größe erstellen.

Aufgabe der Erfindung ist es, einen wirtschaftlich erstellbaren
Silo von einer den jeweiligen Bedürfnissen entsprechenden
Größe zu schaffen, dessenTeile sich raumsparend mit üblichen
LKW anfahren lassen.

Erfindungsgemäß wird diese Aufgabe dadurch gelöst, daß die
Seitenwände aus gleichartigen, im wesentlichen ebenen, seitlich
miteinander verbundenen Wandelementen bestehen, die zu einem
rechteckigen Silobehälter der gewünschten Größe zusammengesetzt
sind. Der formsteife Behälter des erfindungsgemäßen Silos besteht
also aus vorgefertigten gleichartigen Wandelementen, die sich
auf der vorzugsweise betonierten Bodenplatte zu Silobehältern
beliebiger Größe miteinander verbinden lassen. Die Größe der
einzelnen Wandelemente wird dabei derart gewählt, daß sich
diese problemlos und raumsparend auf den Ladeflächen von Lastkraftwagen stapeln lassen und aus diesen mit nur geringen
Montagearbeiten Silos erstellt werden können, deren durch die
Größe der Wandelemente vorgegebenen Größenabstufungen den
Bedürfnissen der Praxis entsprechen.

- 3 -

0089696

Die Wandelemente bestehen zweckmäßigerweise aus rechteckigen Platten mit seitlichen rechtwinkelig abstehenden flanschförmigen Rändern, über die sich die Wandelemente durch Schrauben oder andere Spannelemente in einfacher Weise miteinander verbinden lassen.

Die oberen Ränder der Wandelemente sind zweckmäßigerweise zur Bildung einer nach oben offenen Rinne S-förmig ausgebildet. Die Wandelemente selbst können aus GFK oder aber auch aus mit Kunststoff beschichteten Blechen bestehen.

Zweckmäßigerweise sind die Wandelemente durch zu den flanschartigen Rändern parallele Träger oder stegartige Steher ausgesteift, die, wenn die Wandelemente aus GFK bestehen, in die Wandelemente einlaminiert sind. Zusätzlich können die Träger oder Steher durch querverlaufende Träger miteinander verbunden sein. Mit den unteren Enden der Steher und/oder flanschartigen Ränder können mit dem Boden verschraubbare oder verankerbare Platten verbunden sein, die von den unteren Rändern der Wandelemente überragt werden. Diese Ränder können in eine dem rechtwinkeligen Grundriß des Silos entsprechende Nut der betonierten Bodenplatte eingesetzt sein, wobei die Nut anschließend mit einer Dichtungsmasse zum luftdichten Anschluß der Wandelemente ausgegossen wird. Zusätzlich können an die Steher schräg verlaufende Stützen angeschlossen werden, deren bodenseitigen Enden mit der Bodenplatte verankert sind.

Zur luftdichten Verbindung der Wandelemente können die Fugen zweier miteinander verbundener Wandelemente auf der Innenseite des Silobehälters durch Kunststoffbeschichtungen geschlossen werden. Die Kunststoffbeschichtung kann auf die Fugen überbrückende H-förmige Anker auflaminiert sein.

Die Eckverbindungen der Wandelemente können aus mit diesen verschraubten Winkelprofilen bestehen, die auf den Innenseiten durch Kunststoffaufträge abgedichtet sind.

Die Ecken können auch aus winkeligen, mit seitlichen Flanschen versehenen Wandelementen bestehen, so daß sich mit diesen die plattenförmigen Wandelemente in gleicher Weise wie untereinander verbinden lassen.

In weiterer Ausgestaltung der Erfindung ist vorgesehen, daß die Vorderseite des Silos offen ist und die angrenzenden Wandelemente dreieckig mit schräg zur Bodenplatte verlaufenden Rändern ausgebildet sind, wobei die zur Bodenplatte hin offenen, in den Rändern ausgebildeten Rinnen durch eine in der Bodenplatte verlaufende rinnenförmige Nut miteinander verbunden sind. Bei dieser Ausgestaltung kann auf besondere Einfahr- und Austragsöffnungen, die durch besondere Verschlußelemente geschlossen werden müssen, verzichtet werden, so daß sich der Silo weiter verbilligen läßt.

In weiterer Ausgestaltung der Erfindung ist vorgesehen, daß die über die rinnenförmigen Ränder gezogene Abdeckfolie durch ein auf die in die umlaufende Rinne eingelegtes Profil aus elastomerem Material festgelegt ist, das mit dem Rand durch übergreifende klammerartige Elemente verbunden ist. Die klammerartigen Elemente können aus auf das umlaufende Profil aufgelegten Klemmleisten bestehen, die mit den Rand überragenden parallel zueinander verlaufenden Schenkeln verbunden sind, die fluchtende Langlöcher aufweisen, wobei zwischen die Schenkel der Steg einer den Rand untergreifenden Klemmbacke einschiebbar ist, der mit einem zu den Langlöchern der Schenkel der Länge nach versetztem Langloch versehen ist, und wobei die Klemmleiste und die Klemmbacken durch die Langlöcher geschobene Spannkeile gegeneinander spannbar sind. Durch diese Ausgestaltung ist die

0089696

Montage stark vereinfacht, da die Verbindung nur durch Einschlagen der Spannkeile hergestellt werden kann.

Zweckmäßigerweise ist vor der offenen Seite des Silos in der Bodenplatte ein die Keil-Spann-Verbindung teilweise aufnehmender, im Querschnitt etwa U-förmiger Kanal vorgesehen, dessen dem Silo zugewandter oberer Rand als rinnenförmige Nut zum Festklemmen der Abdeckung ausgebildet ist.

Zur Errichtung des erfindungsgemäßen Silos wird auf der Baustelle eine im wesentlichen ebene, armierte, rechteckige Bodenplatte aus Beton erstellt, deren Größe dem Grundriß des geplanten Silobehälters entspricht. Die Bodenplatte wird mit einem leichten Gefälle zur Sammlung und einer Drainage zur Ableitung der Sickersäfte versehen. An der offenen Beschickungsseite wird zur Schaffung des im Querschnitt U-förmigen Kanals zweckmäßigerweise ein entsprechendes Stahlprofil einbetoniert, das auf seiner dem Silo zugewandten Seite die rinnenförmige Dichtnut in der Breite der Bodenfläche des Siloraumes aufweist. Zur Ableitung von Regenwasser oder Sickersäften ist der Kanal an eine Wasserabführung angeschlossen.

Die die Seitenwände des Silobehälters bildenden Wandelemente aus GFK-Platten können eine Breite von etwa 1,0 bis 2 m und eine Länge bis etwa 8 m aufweisen. Um eine ausreichende Anpassungsfähigkeit an verschiedene Volumen bei möglichst geringer Anzahl verschieden langer Wandelemente zu erreichen, können die Wandelemente einheitlich mit den Längen 4,5 und 6 m hergestellt werden, mit welchen sich Silobehälter mit einer Breite von 4,5 und 6 m und Längen von 12, 16,5, 18, 22,5 und 24 m, usw. errichten lassen. Aufgrund ihrer Ausgestaltung lassen sich die einzelnen Wandelemente auf der Baustelle schnell und mit geringem Aufwand und mit ausreichender mechanischer Festigkeit und gasdicht zu dem Silobehälter aneinanderfügen.

Die mechanische Verbindung erfolgt auf den Außenseiten durch
Verschrauben oder Verkeilen der flanschartigen Schenkel. Um
die Verbindungsstellen luftdicht abzudichten, können die Wände
auf den Innenseiten im Bereich ihrer Enden mit rauhen Oberflächen versehen sein, so daß sich diese durch nachträglich
aufgebrachte überlaminierte Kunststoffschichten gasdicht miteinander verbinden lassen. Die Verbindungen lassen sich zusätzlich noch durch H-förmige Blechanker aussteifen, die mit auflaminierten Schichten überdeckt werden. Im Bereich der Eckverbindungen der Wandelemente können zur Aussteifung die H-förmigen Verbindungselemente abgewinkelt werden, so daß deren
Querstege jeweils auf einer Innenseite der zu verbindenden
Platten liegen.

Die Eckverbindungen werden zweckmäßigerweise dadurch gebildet,
daß an den Enden der Längswände und an den Enden der Querwand
die Armierung mit vertikalen Schenkeln versehen ist, welche
durch Winkelprofile miteinander verschraubt bzw. verkeilt
werden.

Zur leichteren Befüllung des Silos ist es zweckmäßig, die
Wandelemente an der offenen Befüllseite schräg abfallend etwa
mit einem Winkel von 40 bis 50° zur Bodenfläche auszuführen
bzw. an die rechteckigen Seitenwandelemente entsprechende,
dreieckige Wandelemente anzuschließen.

Die Aussteifung der Wandelemente besteht aus Stehern und Längsträgern, die miteinander verschweißt oder verschraubt sein
können, und aus Winkel- oder O-Profilstahl oder Profilrohren.
Diese auf den Außenseiten der GFK-Wandelemente befestigten
Armierungen sind ganz oder teilweise überlaminiert und dadurch innig mit den Wandelementen verbunden. Die Innenseiten der Wandelemente können glattflächig ausgeführt sein. Der überstehende bodenseitige Rand der Wandelemente greift in Nuten der Bodenplatte ein und ist mit aushärtenden Kunststoffen oder kunststoffmodifiziertem Mörtel oder sonstigen Kunststoffen abgedichtet.

Die seitlichen Stützen, die mit der Außenarmierung der Wandelemente verschraubt und mit der Bodenplatte verankert sind, fixieren die Wandabschnitte und stützen diese gegen seitliche Belastungen ab. Die Bodenplatten der aussteifenden Steher und der Stützen werden mit dem Boden verschraubt.

Der obere Rand der Wandelemente ist über die Armierung nach außen hin abgebogen und besitzt an seinem äußeren Rand eine etwa halbrunde, nach oben hin offene rinnenförmige Nut, die als Dichtfuge dient, in welcher die flexible Plane festgelegt wird. Nach dem Verbinden der Wandelemente ergibt sich eine durchgehende, um den gesamten Siloraum laufende Dichtfuge, welche stufenlos in die Dichtfuge des in der Bodenplatte verlegten U-förmigen Profils übergeht. Durch die schräg abfallenden Seitenwände wird die Abdichtung der den Silo überdeckenden Folie oder flexiblen Plane auf der Beschickungsseite wesentlich vereinfacht, da keine Stufen überwunden werden müssen.

Das Anschließen der überdeckenden Folie oder Plane an den Seitenwänden und dem Bodenprofil erfolgt in der Weise, daß die Randbereiche der Plane in die Dichtfugen eingelegt und auf diese ein umlaufender Gummiring oder ein profilierter Ring aus elastomerem Material eingelegt wird, der abschnittweise über Klemmelemente in die Dichtfuge eingedrückt wird. Die Klemmelemente können aus Keilverbindungen bestehen, die

- 8 -

0089696

beispielsweise etwa 80 cm lange Stahlprofilleisten oder Rohrstücke aufweisen, die auf den Gummiring derart aufgelegt werden,
daß die seitlich aufgeschweißten und mit Schlitzen versehenen
Schenkel nach unten weisen und mit den Innenseiten der Schenkel
an dem nach außen umgebogenen Rand der Wandelemente anliegen.
Gegenklemmstücke, die die abgerundete Unterseite der Ränder
untergreifen, weisen ebenfalls mit Langlöchern versehene Schenkel
auf, so daß diese durch eingetriebene Keile mit den Stahlprofilleisten verspannt werden können. Durch eine breite Ausbildung
der Spannkeile kann eine Führung der Spannelemente erreicht
werden, so daß ein Auseinanderklaffen der oberen Spannleisten
sowie der kürzeren Gegenspannteile verhindert wird. Die Keil-
Spannverbindungen sind schnell montierbar, jederzeit nachspannbar
und auf einfache Weise wieder lösbar.

Auch an der Beschickungsseite kann die bodenseitige Verbindung
der Abdeckfolie oder Plane mit der durchgehenden Schiene durch
entsprechende Spannelemente hergestellt werden. Die Spannelemente werden an im Boden versenkten Profilen befestigt, so
daß diese beim Einfahren in den Silo zum Zwecke des Befüllens
und bei der Entnahme des Gutes kein Hindernis darstellen.

Zum Absaugen der Luft ist an den Seitenwänden oder der Rückwand
oder aber auch in der flexiblen Plane eine Luftschleuse mit
einem nach außen ragenden Anschlußstutzen vorgesehen.

Das Beschicken des Silobehälters erfolgt bei abgenommener
Abdeckfolie oder Plane direkt mit einem Ladefahrzeug, einem
Ladewagen oder dergleichen, der rückwärts in den Silo eingefahren und mittels Kratzboden oder dergleichen entladen wird.
Der Silobehälter wird etwa bis auf das Doppelte der Höhe seiner
Seitenwände mit Gut beschickt. Bei größeren Stapelhöhen ist es zweckmäßig, in der Endphase der Beschickung ein Förderband oder ein Frontladegerät einzusetzen, um eine entsprechend hohe Aufschüttung zu erreichen. Wenn die Füllung beendet ist, wird die Dichtnut von eventuellen Füllgutresten gereinigt und die Abdeckfolie oder Plane haubenartig übergezogen und in der beschriebenen Weise in der Dichtnut festgeklemmt.

Bei kleineren Silobehältern etwa bis 150 m³ kann die Beschickung auch mit einem Gebläse erfolgen. In diesem Falle wird die das Füllgut überdeckende Folie oder Plane vorher mit dem Rand des Silobehälters verbunden und das Gut durch eine verschließbare Einblasöffnung im oberen Teil der Folie in Längsrichtung des Silos eingeblasen.

Beim anschließenden Absaugen des Behälters wird der Gutstock je nach Art des ⁂ Schütthöhe zusammengedrückt und dabei entsprechend verdichtet. Gleichzeitig werden dabei 25 bis 30% der im Gutstock und in den Hohlräumen unter der abdeckenden Folie gespeicherten Luft entzogen, wobei der Gärungsprozeß einen äußerst günstigen Verlauf nimmt.

Zur Entnahme des Gutes wird der Behälter an der Beschickungsseite geöffnet und die abdeckende Folie oder Plane im abzutragenden Bereich zurückgeschlagen. Damit zwischen der Plane oder der Folie und dem Gutstock keine Luft eindringen kann, werden auf die Folie oder Plane beschwerende sandgefüllte Schläuche oder Säcke aufgelegt. Das Abtragen des Gutstockes kann mit einem Frontlader, einer Flachsilofräse oder einem Blockschneider erfolgen.

Weitere vorteilhafte Ausgestaltungen der Erfindung sind in den Unteransprüchen beschrieben worden.

⁂ Gutes bis etwa zur halben

Ein Ausführungsbeispiel der Erfindung wird nachstehend anhand der Zeichnung näher erläutert. In dieser zeigt

Fig. 1    eine Seitenansicht des Silobehälters,

Fig. 2    eine Draufsicht auf eine Seite des
          Silobehälters,

Fig. 3    eine Seitenansicht eines Eckausschnitts
          des Silobehälters,

Fig. 4    einen Schnitt durch eine Verbindung der
          Wandelemente des Silobehälters,

Fig. 5    eine Draufsicht auf den Eckausschnitt des
          Silobehälters nach Fig. 3,

Fig. 6    einen Schnitt durch eine Silowand,

Fig. 7    einen Schnitt durch den oberen Bereich
          einer Silowand in vergrößerter Darstellung,

Fig. 8    eine Seitenansicht der Klemmverbindung,

Fig. 9    eine Seitenansicht der den Silorand untergreifenden Klemmbacke,

Fig. 10   eine Rückansicht der Klemmbacke nach Fig. 9,

Fig. 11   eine Seitenansicht der Klemmverbindung
          im Bereich der Bodenplatte,

Fig. 12   eine Draufsicht auf eine andere Ausführungsform
          der Klemmverbindung der den Silobehälter
          überdeckenden Folie oder Plane im Bereich
          der Bodenplatte,

Fig. 13      einen Querschnitt durch die Klemmverbindung
             nach Fig. 12,

Fig. 14      eine perspektivische Ansicht eines sogenannten
             Fahrsilos,

Fig. 15      einen Querschnitt durch den Behälterrand mit
             durch eine Schraubzwinge angeklemmter Folie,

Fig. 16      einen der Fig. 15 entsprechenden Querschnitt
             durch den Behälterrand mit durch einen
             gewichtsbelasteten Bügel angeklemmter Folie,

Fig. 17      eine Draufsicht auf ein Wandelement mit einem
             auflaminierten Baustahlgitter,

Fig. 18      einen Querschnitt durch ein Wandelement nach

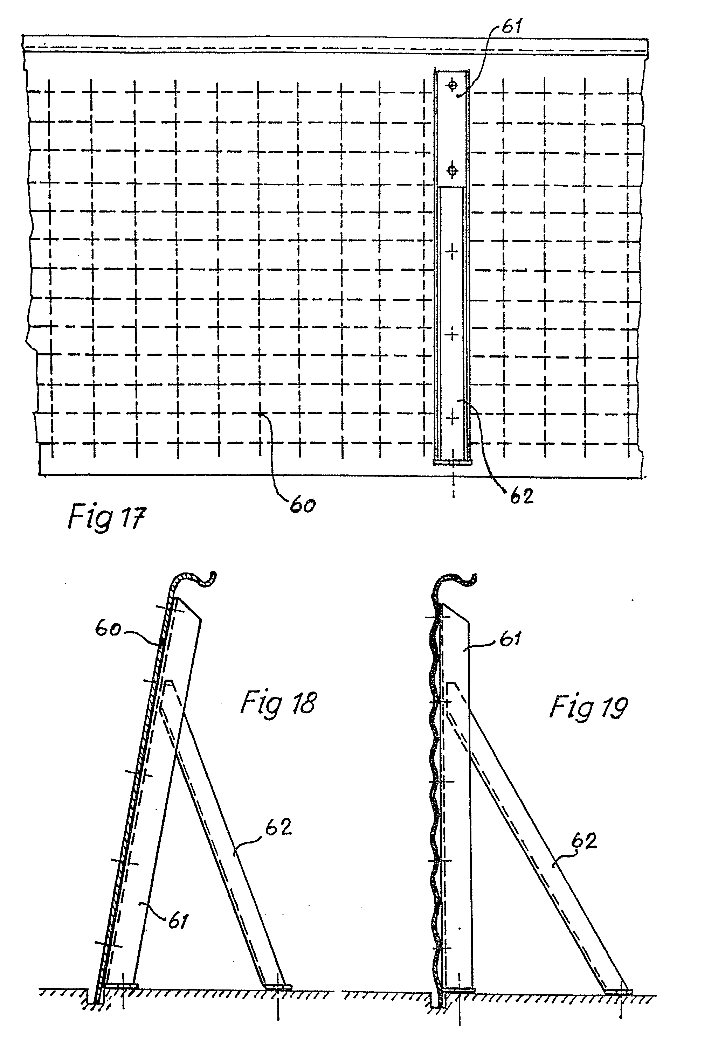

             Fig. 17 und

Fig. 19      einen Querschnitt durch ein Wandelement mit
             wellenförmigem Profil.


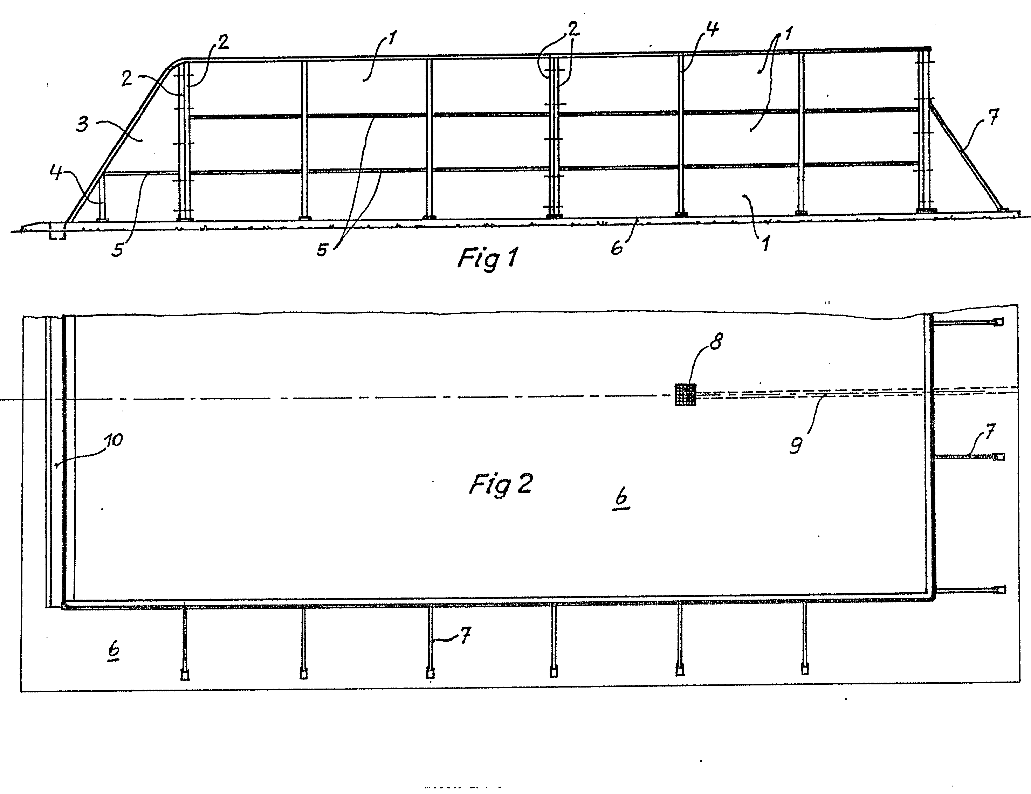

Die aus Fig. 1 ersichtliche Seitenwand des Silobehälters besteht
aus zwei plattenförmigen Wandelementen 1 aus GFK, die über ihre
seitlichen Flansche 2 miteinander verbunden sind. An der
offenen Einfüllseite des Silobehälters ist ein dreieckiges
Wandelement 3 über seinen Flansch 2 mit dem Flansch 2 des
Wandelements 1 verbunden. Die Wandelemente 1, 3 sind durch
einlaminierte, senkrecht verlaufende Träger oder Steher 4 ausgesteift. Die Träger 4 sind miteinander und mit den seitlichen Flanschen 2 durch querverlaufende Träger 5 zur Aussteifung verbunden.

Die Wandelemente 1, 3 sind in der aus den Fig. 1 und 2 ersichtlichen Weise auf einer betonierten Bodenplatte 6 abgestützt. Die Flansche 2 und die Steher 4 sind mit schrägverlaufenden Stützen 7 versehen, deren bodenseitigen Enden mit der Bodenplatte 6 verankert sind.

Die Bodenplatte 6 ist leicht zu einem Schacht 8 hin geneigt, der durch ein Rost abgedeckt ist und der Sammlung von Sickersäften dient. Zur Abführung der Sickersäfte ist der Schacht 8 mit einem Abführungsrohr 9 versehen.

Der obere Rand der Silowandungen ist mit einer nach oben hin offenen rinnenförmigen Nut versehen, die auch über den schräg verlaufenden Rand des Wandelements 3 und zwischen den Wandelementen 3 in einem in die Bodenplatte 6 eingesetzten U-förmigen Profil 10 fortgesetzt ist.

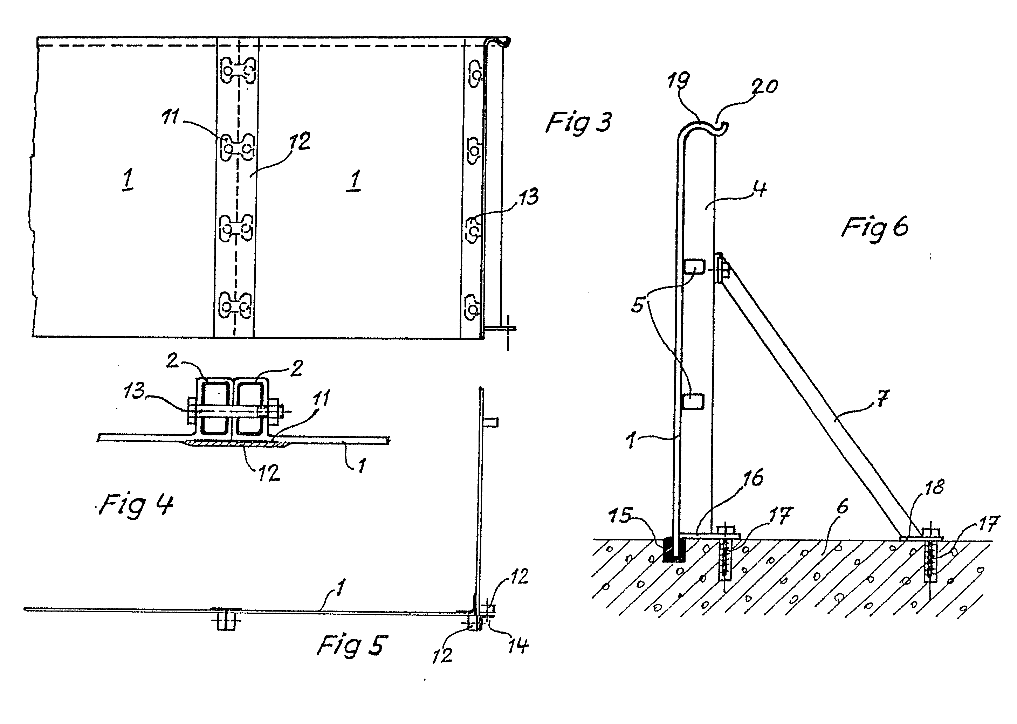

Wie aus Fig. 3 ersichtlich ist, sind auf der Innenseite der Silowandungen über die Fugen zwischen zwei Wandelementen 1 H-förmige Anker 11, die aus Blechstanzteilen bestehen können, aufgelegt, die zu ihrer Befestigung von laminierten Kunststoffschichten 12 überdeckt sind, die gleichzeitig auch dem luftdichten Abschluß der Fugen dienen. Im Bereich der Ecken werden abgewinkelte Anker 13 eingesetzt.

Wie aus Fig. 4 ersichtlich ist, bestehen die Verbindungsflansche 2 aus Schenkeln mit Hohlprofilen, die durch Bolzen 13 miteinander verschraubt sind. Im Eckbereich werden die rechtwinkelig zueinander stehenden Flansche 12 in der aus Fig. 5 ersichtlichen Weise über ein Winkelprofil 14 miteinander verschraubt.

Die Verbindung der Wandelemente 1 mit der betonierten Bodenplatte 6 ist aus Fig. 6 ersichtlich. Die Bodenplatte 6 ist
mit einer umlaufenden Nut 15 versehen, in die die unteren
Ränder der Wandelemente 1 eingreifen. Die Flansche 2 der Wandelemente und die identisch ausgebildeten Stützen oder Steher 4
tragen an ihren unteren Enden Bodenplatten 16, die in der dargestellten Weise mit Bohrungen versehen sind, in die zur
Befestigung in der betonierten Bodenplatte 6 Schraubbolzen 17
eingeschraubt sind. Zur zusätzlichen Abstützung der Wandelemente
1 sind mit den Flanschen 2 und Stehern 4 Stützen 7 verschraubt,
die an ihren bodenseitigen Enden ebenfalls Platten 18 tragen,
die in der dargestellten Weise mit dem Boden verschraubt sind.
Die oberen Ränder 19 der Wandelemente 1 sind S-förmig nach
außen hin abgebogen und weisen eine äußere, nach oben hin
offene rinnenförmige Nut 20 auf.

Die die Platten 16 überragenden unteren Ränder der Wandelemente 1
sind in der umlaufenden Nut 15 der Betonplatte 6 mit einer
Dichtmasse ausgegossen, so daß auch die bodenseitige Verbindung
der Wandelemente luftdicht ist.

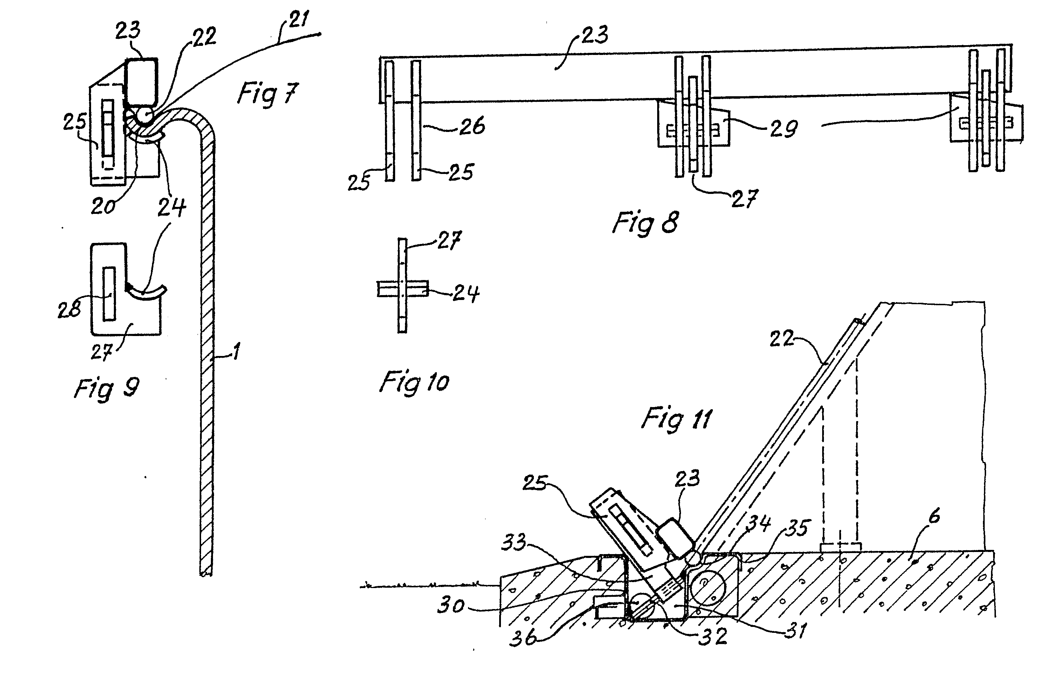

Wie aus Fig. 7 ersichtlich ist, ist die den Silo abdeckende
Folie oder Plane 21 mit ihrem Randbereich in die rinnenförmige
Nut 20 eingelegt und mit einem aufgelegten umlaufenden, im
Querschnitt etwa kreisrunden Gummiring 22 versehen. Auf den
Gummiring 22 stützt sich eine Klemmleiste 23 ab, die mit einer
den Rand 19 untergreifenden Gegenbacke 24 verspannt ist.

Die Spannverbindung wird anhand der Fig. 8 bis 10 näher erläutert. Die Klemmleiste 23 ist mit drei Paaren von in dichtem
Abstand parallel zueinander verlaufenden Schenkeln 25 versehen,
die von fluchtenden Langlöchern 26 durchsetzt sind. Zwischen
die Schenkel 25 ist der Steg 27 der Klemmbacke 24 einschiebbar.

Zum Gegeneinanderspannen der Klemmleiste 23 und der Klemmbacken 24 ist auch der Steg 27 mit einem Langloch 28 versehen,
wobei durch die Langlöcher 26, 28 in der aus Fig. 8 ersichtlichen
Weise ein Klemmkeil 29 hindurchgeführt wird. Der Klemmkeil
stützt sich mit seiner oberen Keilfläche an dem oberen Rand
des Langloches 28 und mit seiner unteren Keilfläche auf den
unteren Rändern der Langlöcher 26 ab, so daß er durch Eintreiben
die Klemmleiste 23 mit den Klemmbacken 24 verspannt.

Im Bereich der Ein- und Austragsöffnung des Silos ist die
Klemmverbindung in dem U-förmigen Profilblech 30 angeordnet,
das in die Bodenplatte 6 eingelassen ist und einen querverlaufenden Kanal bildet. Die Klemmleiste 23 und die mit dieser
verbundenen Schenkel 25 sind im wesentlichen in gleicher Weise
ausgestaltet wie bei der aus den Fig. 7 bis 10 ersichtlichen
Klemmverbindung. Die Stege 33 der Gegenklemmstücke sind an
in dem Profil 30 eingeschweißten, schräg verlaufenden Trägern
oder Stangen 22 festgelegt.

Das Profil 30 weist an seinem oberen, dem Silo zugewandten
Rand eine rinnenförmige Nut 34 auf, in die der die heruntergezogene Abdeckfolie oder Plane festklemmende Gummiring 22
eingelegt ist.

Das Profil 23 ist weiterhin zur besseren Befestigung in der
betonierten Bodenplatte 6 mit abgewinkelten flanschförmigen
Fortsätzen 35 versehen. An seinen Stirnseiten weist das Profil
30 Durchflußöffnungen 36 zur Entwässerung auf.

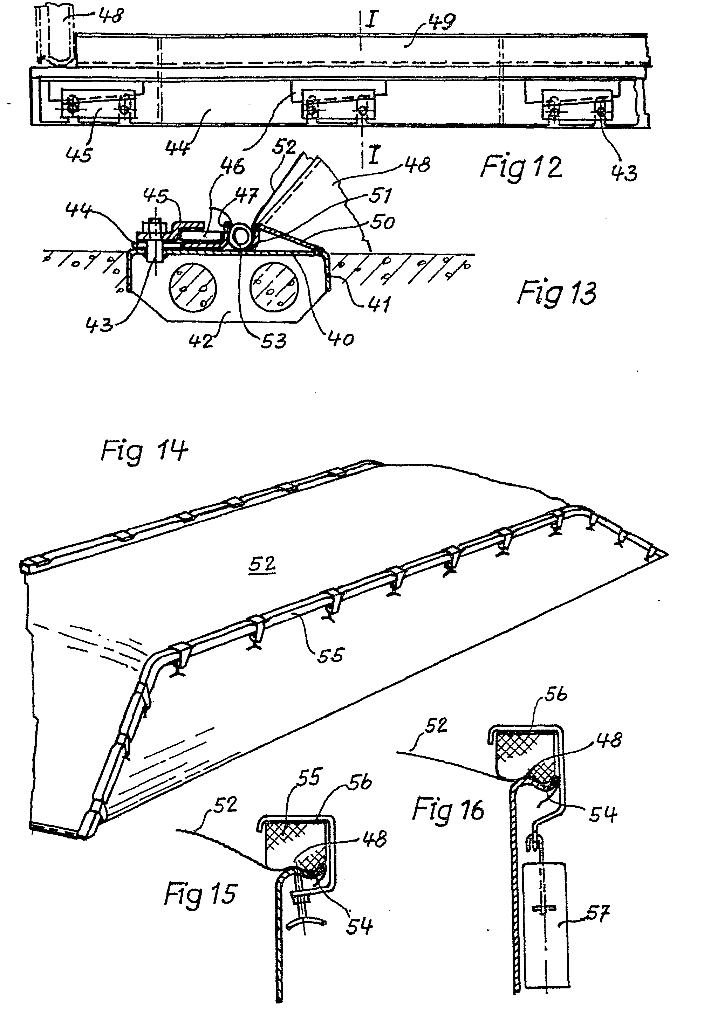

Eine weitere Befestigung der den Silo abdeckenden Plane oder
Folie im Bereich der Bodenplatte wird nachstehend anhand der
Fig. 12 und 13 erläutert. In die betonierte Bodenplatte ist ein
U-förmig profiliertes Blech eingelassen, dessen seitlichen abgewinkelten Schenkel 41 nach unten weisen. Zwischen die Schenkel

sind quer verlaufende Stegbleche 42 eingeschweißt, die zur
besseren Verankerung mit Ausnehmungen versehen sind. Das profilierte Blech ist in der Weise in die Bodenplatte einbetoniert,
daß der Stegteil 40 des Bleches etwa in der Ebene der Bodenplatte liegt. Im Bereich der hinteren Seite des Stegteils 40
sind in das Blechprofil jeweils paarweise Schraubbolzen 43 eingeschweißt, auf denen eine Klemmschiene 44 mit L-förmigem Profil
gehaltert ist. Der längere Schenkel der Klemmschiene 44 ist mit
frei auslaufenden Langlöchern versehen, so daß diese auf den
Schraubbolzen 43 in Querrichtung verschieblich geführt ist. Auf
die jeweils paarweise angeordneten Schraubbolzen 43 ist eine
Z-förmig abgewinkelte Führungsplatte 45 oberhalb des längeren
Schenkels der Klemmschiene 44 aufgesetzt. Die Klemmschiene 44
ist über die Führungsplatte 45 durch auf die Schraubbolzen 43
aufgeschraubte Muttern verspannt. Das Stegteil der Z-förmig profilierten Führungsplatte verläuft spitzwinkelig zu dem kürzeren
senkrecht stehenden Schenkel der Klemmschiene. In den sich keilförmig verengenden Raum zwischen der Führungsplatte 45 und dem
senkrecht stehenden Schenkel 47 der Führungsschiene ist ein Keil
46 angeordnet.

Parallel zu dem senkrecht stehenden Schenkel 47 der Klemmschiene
44 ist vor diesem auf dem Stegteil 44 des profilierten Bleches
als Widerlager ein abgewinkeltes Blech 49 befestigt, das einen
keilförmig gegen den Silobehälter abfallenden Schenkel 50 und
auf seiner der Klemmschiene zugewandten Seite einen etwa senkrecht verlaufenden zylinderschalenförmig gekrümmten Schenkel
51 aufweist. Die Folie oder Plane 52 wird zu ihrer Befestigung
auf der Bodenplatte über die zwischen den Schenkeln 47, 51
gebildete Nut gezogen und in diese Nut durch einen eingelegten
Gummischlauch ausreichender Steifigkeit eingedrückt. Zur Befestigung der Folie oder Plane 52 in der Nut werden sodann die
Keile 46 eingetrieben, so daß der Gummischlauch 53 unter Festklemmen der Folie oder Plane 52 zwischen den Schenkeln 47, 51
verspannt wird. Nach ausreichender Verspannung werden die Muttern der Schraubbolzen 43 festgezogen.

Die anhand der Fig. 12 und 13 beschriebene Bodenbefestigung der Folie oder Plane ist insbesondere bei Ausgestaltung des Silos als sogenannten Fahrsilo nach Fig. 14 zweckmäßig. Dieser Fahrsilo weist lediglich formsteife Seitenwandungen auf, so daß zum Befüllen Lade- oder Dosierwagen zum Einbringen des Gutes durch den Silo hindurchfahren können. Durch Überfahren des Gutes mit den Wagen und Schleppern wird dieses zusätzlich verdichtet. Nach der Füllung des Silos wird eine Folie oder Plane über die Seitenwände des Silos gelegt und mit dessen Rändern und dem Boden verbunden. Die Abdichtung gegen den Boden erfolgt durch den eingekeilten Gummischlauch, der die Enden übergreift und unmittelbar an die bis zum Boden heruntergezogenen Ränder 48 der Siloseitenwände anschließt.

Die oberen Ränder 48 der Siloseitenwände sind in der aus den Fig. 15 und 16 ersichtlichen Weise S-förmig nach außen abgebogen, so daß eine äußere Rinne 54 gebildet ist. Die Folie oder Plane 52 wird in der dargestellten Weise bis über den rinnenförmigen äußeren Rand 54 gezogen. Auf den Rand 54 werden Schaumgummistränge 55 mit etwa rechteckigem Querschnitt aufgelegt, die auf ihrer Oberseite mit einer Schutzfolie 56 aus Kunststoff verbunden sind.

Bei der Ausführungsform nach Fig. 15 werden die Schaumgummistränge von den oberen Schenkeln 56 von Schraubzwingen übergriffen, deren Spannschrauben sich auf der Unterseite des Randes 54 abstützen. Bei der Ausgestaltung nach Fig. 16 ist an den unteren nach innen abgewinkelten Schenkel des Spannbügels ein Betongewicht 57 angehängt.

Der erfindungsgemäße Silo läßt sich einfach und billig herstellen und in einfacher Weise befüllen und mit der die Oberseite und Stirnseiten überdeckenden Folie oder Plane verschließen.

Die Folie oder Plane sowie die diese an dem rinnenförmigen Rand
und der Bodenplatte festklemmenden Elemente lassen sich wiederholt verwenden.

Die Fig. 17 und 18 zeigen ein aus Blech oder einer Platte aus
GFK bestehendes Wandelement, auf dessen Außenseite ein Baustahlgitter 60 aufgelegt und durch auflaminierten Kunststoff mit
dem Blech oder der Platte verbunden ist. Durch das auflaminierte
Baustahlgitter läßt sich das Wandelement in einfacher Weise
aussteifen, so daß auf aussteifende Längs- und/oder Querträger
verzichtet werden kann. Der Wegfall von aussteifenden Längsträgern ermöglicht zusätzlich die vereinfachte Befestigung der
senkrecht verlaufenden Träger 61, an die die schräg
verlaufenden Stützen 62 angeschlossen sind. Die Träger 61 können
an beliebiger Stelle durch Schraubverbindungen mit den Wandelementen verbunden werden, wozu es lediglich erforderlich ist,
die Wandelemente mit entsprechenden mit den Bohrungen der Träger
fluchtenden Bohrungen zu versehen. Die Stützen 62 können mit
den Trägern 61 durch Schweißverbindungen verbunden sein, die
zur Erleichterung der Aufstellung bereits werksseitig vorgenommen sein können.

Eine ausreichende Aussteifung der Platten oder Bleche ohne
zusätzliche Träger kann auch durch eine wellenartige Profilierung erfolgen, wie sie aus Fig. 19 ersichtlich ist. Die Wellen
verlaufen dabei in Längsrichtung der Wandelemente, also etwa
parallel zu der Bodenplatte.

Die nach unten hin die Fußstücke der Träger 61 überragenden
Ränder der Wandelemente greifen in nutförmige Rinnen der Bodenplatte, die zur Abdichtung mit einem Kunstharz oder Bitumen
ausgegossen werden.

8 München 22, Widenmoyerstrasse 23
Telefon (089) 22 06 74-78

Telex: 524 109 Lowp d
Telegrammonschrift: Lowpol München

Postscheck: München 170280-804
Bankkonto: Bayerische Vereinsbank
München Konto 862.010

´EDUARD LORENZ · BERNHARD SEIDLER · MARGRIT SEIDLER
DIPL.-ING. HANS K. GOSSEL · DR. INA PHILIPPS

RECHTSANWÄLTE

0089696

Seite 18

Statt eines Baustahlgitters können auf die Wandelemente zur Aussteifung auch Stahlspäne, Stahldrähte oder Stahlwolle in unregelmäßig aufgebrachter Form auflaminiert werden.

8 München 22, Widenmayerstrasse 23    Telex: 5 24 109 Lowp d    Postscheck: München 1702 80-804
Telefon (089) 22 06 74 – 78    Telegrammanschrift: Lowpot München    Bankkonto: Bayerische Vereinsbank
München, Konto 862019

Ing. Josef Lesslhumer,
4600 Wels (Österreich)

---

Silo für Futtermittel

---

Patentansprüche:

1. Silo für Futtermittel, wie Grünfutter, Maisschrot oder
   dergleichen, mit auf einer Bodenplatte im wesentlichen
   luftdicht abgestützten Seitenwänden, an deren oberen
   Rändern eine den Silo überdeckende und im wesentlichen
   luftdicht verschließende Folie befestigt ist, und mit
   einer Luft aus dem geschlossenen Innenraum des Silos
   absaugenden Einrichtung, dadurch gekennzeichnet, daß
   die Seitenwände aus gleichartigen, im wesentlichen
   ebenen, seitlich miteinander verbundenen Wandelementen
   (1, 3) bestehen, die zu einem rechteckigen Silobehälter
   der gewünschten Größe zusammengesetzt sind.

0089696

2. Silo nach Anspruch 1, dadurch gekennzeichnet, daß die Wandelemente (1) aus rechteckigen Platten mit seitlichen rechtwinkelig abstehenden flanschförmigen Rändern (2) bestehen.

3. Silo nach Anspruch 1 oder 2, dadurch gekennzeichnet, daß die oberen Ränder (19) der Wandelemente (1, 3) zur Bildung einer nach oben offenen Rinne (20) S-förmig ausgebildet sind.

4. Silo nach einem der Ansprüche 1 bis 3, dadurch gekennzeichnet, daß die Wandelemente (1, 3) aus GFK bestehen.

5. Silo nach einem der Ansprüche 1 bis 4, dadurch gekennzeichnet, daß die Wandelemente durch zu den flanschartigen Rändern (2) parallele Träger oder stegartige Steher (4) ausgesteift sind.

6. Silo nach einem der Ansprüche 1 bis 5, dadurch gekennzeichnet, daß die Träger oder Steher (4) und Flansche (2) durch querverlaufende Träger (5) miteinander verbunden sind.

7. Silo nach einem der Ansprüche 1 bis 6, dadurch gekennzeichnet, daß mit den unteren Enden der Steher und/oder flanschartigen Ränder mit dem Boden (6) verschraubbare oder verankerbare Platten (16) verbunden sind, die von den unteren Rändern der Wandelemente (1) überragt werden, und daß die unteren Enden der Wandelemente (1) in eine dem rechtwinkeligen Grundriß des Silos entsprechende Nut (15) eingesetzt sind und die Nut mit einer Dichtungsmasse ausgegossen ist.

8. Silo nach einem der Ansprüche 1 bis 7, dadurch gekennzeichnet, daß an die Steher (4) und/oder flanschartigen Ränder (2) schräg verlaufende Stützen (7) angeschlossen sind, deren bodenseitigen Enden mit der Bodenplatte (6) verankert sind.

9. Silo nach einem der Ansprüche 1 bis 8, dadurch gekennzeichnet, daß die Fugen zweier miteinander verbundener Wandelemente (1, 3) auf der Innenseite des Silos durch Kunststoffbeschichtungen (12) geschlossen sind.

10. Silo nach Anspruch 9, dadurch gekennzeichnet, daß die Kunststoffbeschichtungen (12) auf die Fugen überbrückende H-förmige Anker (11) auflaminiert sind.

11. Silo nach einem der vorstehenden Ansprüche, dadurch gekennzeichnet, daß die Eckverbindungen der Wandelemente (1) aus mit diesen verschraubten Winkelprofilen (14) bestehen.

12. Silo nach einem der Ansprüche 1 bis 10, dadurch gekennzeichnet, daß die Ecken des Silobehälters aus winkeligen, mit seitlichen Flanschen versehenen Wandelementen bestehen.

13. Silo nach einem der vorhergehenden Ansprüche, dadurch gekennzeichnet, daß die Vorderseite des Silos offen ist und die angrenzenden Wandelemente (3) dreieckig mit schräg zur Bodenplatte (6) verlaufenden Rändern ausgebildet sind und daß die zur Bodenplatte hin offenen, in den Rändern
ausgebildeten Rinnen durch eine in der Bodenplatte (6)
verlaufende rinnenförmige Nut (34) miteinander verbunden
sind.

14. Silo nach einem der vorhergehenden Ansprüche, dadurch
gekennzeichnet, daß die über die rinnenförmigen Ränder
(19, 20) gezogene Abdeckfolie (21) durch ein auf die in
die umlaufende Rinne (20) eingelegtes Profil (22) aus
elastomerem Material festgelegt ist, das mit dem Rand (19)
durch übergreifende klammerartige Elemente verbunden ist.

15. Silo nach Anspruch 14, dadurch gekennzeichnet, daß die
klammerartigen Elemente aus auf das umlaufende Profil (22)
aufgelegten Klemmleisten (23) bestehen, die mit den Rand
(19) überragenden, parallel zueinander verlaufenden
Schenkeln (25) versehen sind, die fluchtende Langlöcher
(26) aufweisen, und daß zwischen die Schenkel (25) der
Steg (27) einer den Rand untergreifenden Klemmbacke (24)
einschiebbar ist, der mit einem zu den Langlöchern (26)
der Schenkel (25) der Länge nach versetztem Langloch (28)
versehen ist, und daß die Klemmleiste (23) und die Klemmbacken (24) durch durch die Langlöcher (26, 28) geschobene
Spannkeile (29) gegeneinander spannbar sind.

16. Silo nach einem der vorhergehenden Ansprüche, dadurch
gekennzeichnet, daß vor der offenen Seite des Silos in
der Bodenplatte (6) ein die Keil-Spann-Verbindung teilweise
aufnehmender, im Querschnitt etwa U-förmiger Kanal (31)
vorgesehen ist, dessen dem Silo zugewandter oberer Rand
als rinnenförmige Nut (34) zum Festklemmen der folienförmigen Abdeckung (21) ausgebildet ist.

17. Silo nach Anspruch 14, dadurch gekennzeichnet, daß die klammerartigen Elemente aus einem Bügel bestehen, dessen oberer Schenkel (56) das Profil (55) übergreift und dessen unterer Schenkel über eine in diesen eingeschraubte Spannschraube auf der Unterseite des rinnenförmigen Randes (54) abgestützt ist.

18. Silo nach Anspruch 14, dadurch gekennzeichnet, daß die klammerartigen Elemente aus einem Bügel bestehen, dessen oberer Schenkel das Profil (55) übergreift und an dessen unteren, nach innen abgewinkelten Schenkel ein Gewicht (57) angehängt ist.

19. Silo nach einem der vorhergehenden Ansprüche, dadurch gekennzeichnet, daß die in die rinnenförmigen Ränder (54) eingelegten Profile aus Schaumgummisträngen (55) bestehen.

20. Silo nach Anspruch 19, dadurch gekennzeichnet, daß die Schaumgummistränge einen etwa rechteckigen Querschnitt und einen auf der oberen Seite befestigtes wasserabweisendes Kunststoffband (56) aufweisen.

21. Silo nach einem der vorhergehenden Ansprüche, dadurch gekennzeichnet, daß vor der oder den offenen Seiten des Silos eine profilierte Leiste befestigt ist, deren dem Silo zugewandte Rückseite (50) schräg abfällt und deren etwa senkrecht abfallende Vorderseite (51) zylinderschalen- oder rinnenförmig gekrümmt ist, daß vor der Leiste eine L-förmig profilierte Schiene (44) querverschieblich geführt und in die Nut zwischen den hochstehenden Schenkeln (47, 51) dieser

Schiene und der Vorderseite der Leiste ein Schlauch oder dergleichen einlegbar ist und daß im Bereich der hinteren Kante der Schiene (44) bodenfeste Widerlager (43, 45) vorgesehen sind, zwischen denen und dem hochstehenden Schenkel (47) die Schiene (44) in Richtung auf die Leiste (50, 51) spannende Keile (46) eingelegt sind.

22. Silo nach einem der Ansprüche 1 bis 14, dadurch gekennzeichnet, daß die Wandelemente aus Blechen oder Platten aus GFK bestehen, auf die einseitig mindestens in deren mittleren Bereich ein Baustahlgitter (60), Stahlspäne, Stahldrähte oder Stahlwolle aufgebracht und durch auflaminierten Kunststoff mit diesen verbunden sind.

23. Silo nach einem der Ansprüche 1 bis 14, dadurch gekennzeichnet, daß die aus Blechen oder Platten aus GFK bestehenden Wandelemente zu ihrer Aussteifung ein wellenförmiges Profil aufweisen.

Fig 1

Fig 2

Fig 3

Fig 4

Fig 5

Fig 6

Fig 7

Fig 8

Fig 9

Fig 10

Fig 11

0089696

Fig 12

Fig 13

Fig 14

52

55

Fig 15

52 55 56 48 54

Fig 16

52 56 48 54 57

Fig 17

Fig 18

Fig 19

Europäisches
Patentamt

EUROPÄISCHER RECHERCHENBERICHT

**0089696**
Nummer der Anmeldung

EP 83 10 2940

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y,A | DE-U-1 878 204 (T. NAGEL) <br><br> * Ansprüche 1, 2, 4-6; Seite 2, Zeile 7 - Seite 5, Zeile 14; Figuren 1, 4, 5 * <br><br> --- | 1,3,8, 13,14, 19 | A 01 F 25/16 |
| Y | FR-A-1 558 688 (R. BONAZZI) <br> * Seite 1, rechte Spalte, Zeile 10 - Seite 2, linke Spalte, Zeile 29; Figur 2 * <br><br> ----- | 1,14 | |

RECHERCHIERTE SACHGEBIETE (Int. Cl. ³)

A 01 F 25/00
E 04 H 7/22

Der vorliegende Recherchenbericht wurde für alle Patentansprüche erstellt.

| Recherchenort <br> BERLIN | Abschlußdatum der Recherche <br> 15-06-1983 | Prüfer <br> BERGZOLL M C |
|---|---|---|